Europäisches Patentamt

European Patent Office

Office européen des brevets

(19)

(11) Publication number: **0 025 408**
**A2**

(12)

# EUROPEAN PATENT APPLICATION

(21) Application number: **80630040.6**

(22) Date of filing: **05.09.80**

(51) Int. Cl.³: **B 06 B 1/16**

(30) Priority: **06.09.79 US 73115**

(43) Date of publication of application:
**18.03.81 Bulletin 81/11**

(84) Designated Contracting States:
**BE CH DE FR GB IT LI NL SE**

(71) Applicant: **REXNORD INC.**
**P.O. Box 2022**
**Milwaukee, Wisconsin 53201(US)**

(72) Inventor: **Morris, John Marshall**
**6414 Longview Lane**
**Louisville Kentucky 40222(US)**

(74) Representative: **Weydert, Robert et al,**
**Office Dennemeyer S.à.r.l. 21-25 Allée Scheffer P.O. Box 41**
**L-Luxembourg(LU)**

(54) **Directionally variable vibration generator.**

(57) A vibration generator for a reversible vibratory feeder or similar device that requires a change in the direction of a generally linear vibratory drive force comprises at least a pair of contra-rotating shafts (6,7) carrying eccentric weights (9, 10) in which one of the weights (10) is journalled on its shaft (7) so that it may shift from one angular position relative to its shaft to another according to the direction of rotation of the shafts.

FIG. 9

Croydon Printing Company Ltd.

DIRECTIONALLY VARIABLE VIBRATION GENERATOR

It is often desirable in material feeding systems to be able to switch the flow of material from one path to another while controlling the rate of flow. An example is the control of the flow of material from a hopper while directing the material to one or the other of a pair of conveyors. Preferably the selection of direction should be made by merely throwing a switch. For example, in a feeder embodying the invention, in which the feeder may discharge from either end, the direction of flow of material varies according to the direction of rotation of the eccentric weights. In general, the direction of the vibratory path of a vibratory apparatus driven by eccentric weights can be varied by changing the direction of rotation of the weights. In the improved vibration generator two or more shafts rotating in opposite directions at the same speed each carry an eccentric weight. One or some of the weights are fixed to its or their shafts. At least one eccentric weight is journalled on its shaft and is movable between stops permitting up to, and in some cases more than, $180^{\circ}$ relative movement between the weight and its shaft. Since, during startup and operation, the weight is driven by one or the other of the stops a reversal of the drive motor results in a phase shift in the position of the weight on the shaft. This results in a corresponding shift in the direction of vibration of the driven vibratory feeder or other device.

When applied to a reversible feeder the weights and stops are arranged so that, as seen from the side of the feeder, the path of vibration is selectively along lines inclined upwardly to the right or left according to the direction of rotation of the weights. This produces conveying either to the right or left.

By changing the phasing of the weights on the shafts the vibratory path may be shifted, for example, from a vertical path to an inclined path to give either agitation without conveying or maximum conveying by merely reversing the direction of rotation of the eccentric weights.

Similarly, in a helical conveyor drive, where rotating eccentric weights are mounted on the ends of shafts extending generally along a diameter of the helix, the weights on each side of the conveyor may include both fixedly mounted and movable weights arranged so that the helical vibratory motion may be selectively directed along different helical paths by selecting the direction of rotation of the weights. Thus the flow of material on the helical flights may be reversed by merely reversing the drive motor.

Preferred forms of the invention are illustrated in the accompanying drawings.

In the drawings:

Fig. 1 is a simplified side elevation of a reversible vibratory feeder embodying the invention.

Fig. 2 is a vertical section as seen from the line 2-2 of Fig. 1.

Fig. 3 is a front view of one arrangement for limiting the motion of a journalled eccentric weight relative to its rotating shaft.

Fig. 4 is a side view of the weight and its drive.

Fig. 5 is an isometric view showing the rotating shafts and eccentric weights of the vibration generator for the feeder shown in Fig. 1.

Fig. 6 is a vector diagram to show the relationship of the forces developed by the rotating eccentric weights.

Fig. 7 is an isometric view showing the rotating shafts and weights as used to drive a reversible helical conveyor.

Fig. 8 is a vector diagram to show the relationship of the forces developed in the system shown in Fig. 7.

Fig. 9 is an isometric view of a vibration generator employing two contra-rotating weights, one of which is journalled on its shaft.

These specific drawings and the accompanying description are intended only as illustrations of the invention and not as limitations on its scope.

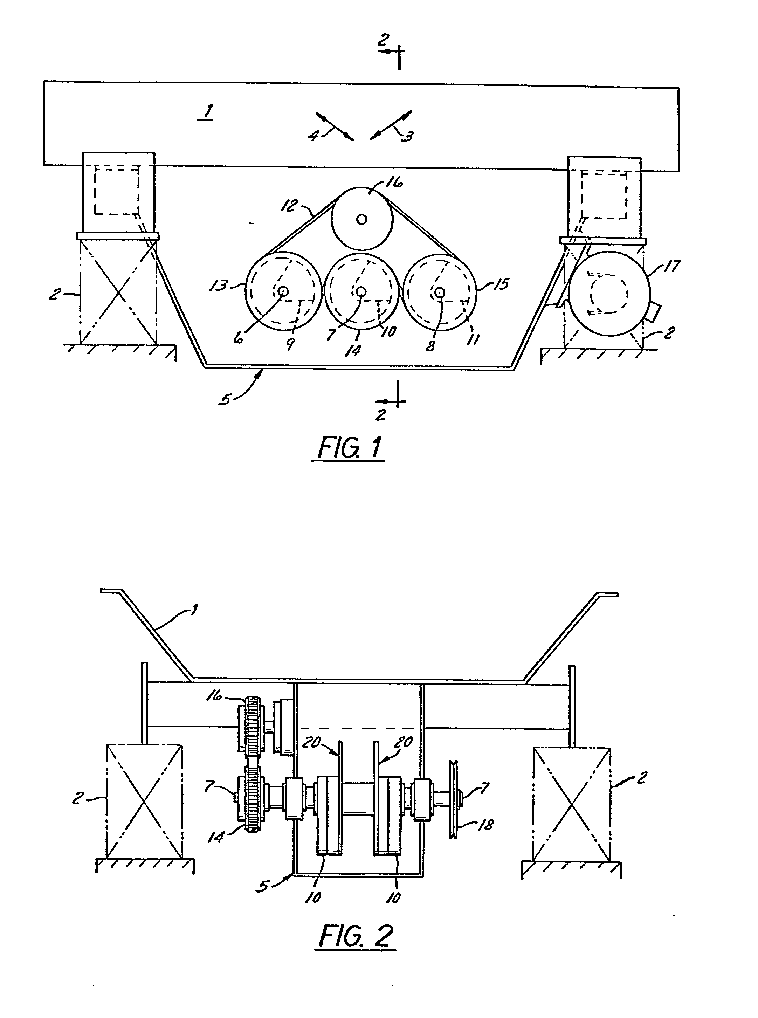

One use of the vibration generator is driving a reversible vibratory feeder that controls the flow of material from a hopper and that feeds the material to one or the other of two paths. Such a feeder, as shown in Fig. 1, comprises a trough 1, open at each end, that is supported on isolation mounts 2 so that it is free to vibrate. The feeder is intended to be installed under a hopper discharge so that flow from the hopper is onto the middle of the trough. If the trough is vibrated along a path indicated by double headed arrow 3 the flow is to the right while if the vibration is along a path indicated by double headed arrow 4 the flow is to the left.

The vibration of the trough 1 is produced by a vibration generator 5 attached to the under side of the trough 1. The working parts of the generator 5 include transversely extending shafts 6, 7 and 8 that carry eccentric weights 9, 10, and 11 shown by dotted lines in Fig. 1. The shafts are operatively connected by a double faced toothed timing belt 12 running on toothed pulleys 13, 14, and 15 mounted on the shafts 6, 7, and 8 respectively. As shown, the belt 12 runs under pulley 13, over pulley 14, then under pulley 15 and returns over idler pulley 16 so that shafts 6 and 8 turn in one direction at the same speed while shaft 7 turns in the opposite direction at the same speed.

The shafts and eccentric weights are driven by a reversible motor 17 mounted on the frame of the generator 5 and connected by a belt (not shown) to sheave 18 mounted on shaft 7.

A toothed timing belt is preferred as the drive means between the shafts although a roller chain or gears may be used.

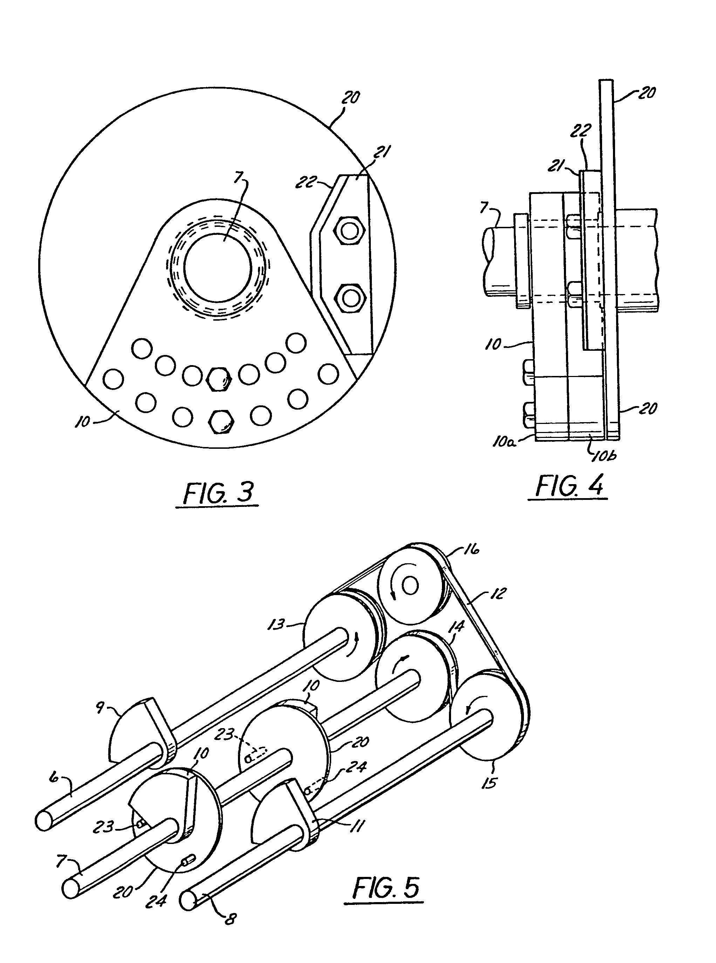

Referring ot Figs. 3 and 4, the eccentric weight 10 is journalled on the shaft 7 adjacent a drive disk 20 rigidly mounted on the shaft 7. The disk 20 carries a double ended stop 21 that inlcudes a resilient portion 22 that engages one flank or the other of the eccentric weight 10 to limit its rotation relative to the disk 20 and shaft 7.

To provide adjustment of the operative position of the eccentric weight 10 to the shaft 7 the weight 10 may be made in two parts 10a and 10b. Weight part 10b engages the stop 21 while the weight part 10a is bolted to part 10b in adjusted position. Alternatively, the stop 21 could be adjusted relative to the disk 20.

As shown in Fig. 5, shafts 6 and 8 turn in a first direction while shaft 7 turns in the opposite direction. In the particular position shown the weights are in alignment to the centrifugal forces add. The weight 10 tends to lag behind the disk 20 until driven by a pin 23 (corresponding to one end of the stop 22). If the direction of rotation is reversed the weight 10 moves clockwise, as seen in the figure, until engaged and driven by pin 24.

The positions of the weights and stops may be easily determined once the desired paths of vibration are known or defined. As is well known, each of the eccentric weights when rotating, develops a centrifugal force proportional to the product of the mass of the weight times the distance (or radius) of its center of gravity from the center of the shaft. to eliminate force couples it is desirable that the resultant of all of the centrifugal forces act through a single point. Also the force of the weight 10 (which weight may be divided into parts spaced apart along the shaft 7) should be equal to the sum of the forces of the weights 9 and 11 and located in adjacent planes normal to the shafts.

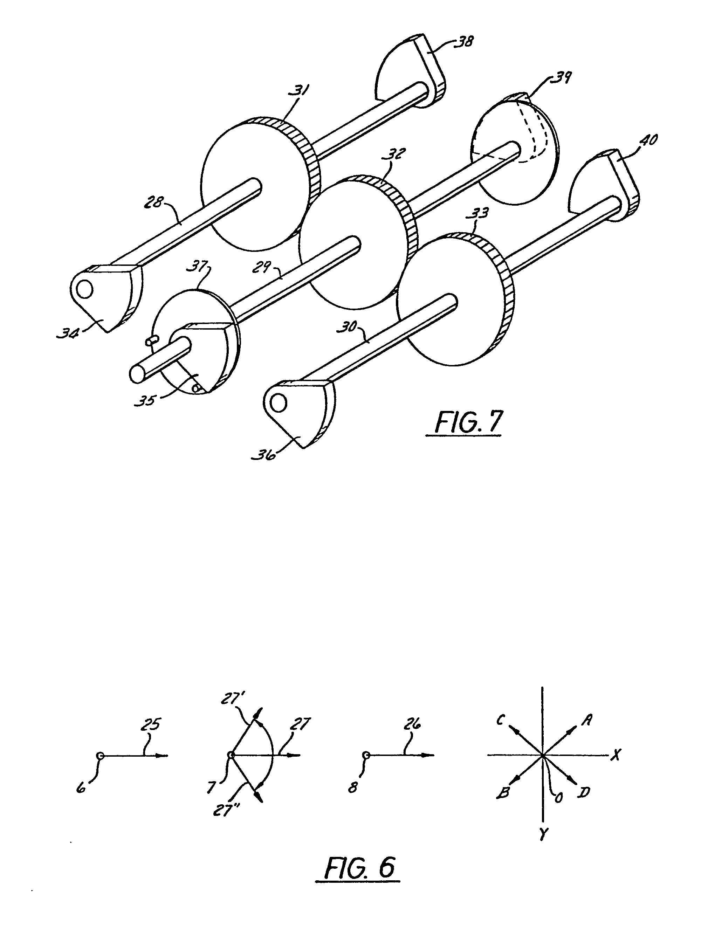

The angular positions may be determined using the vector diagram, Fig. 6. In this diagram let A-B and C-D represent the desired vibratory paths or directions of the composite force of the weights. A-B may, for example, represent forward conveying on the feeder while C-D represents reverse conveying. Angle AOD is bisected to define a reference axis O-X. With the radii of weights 9 and 11, represented by vectors 25, 26, aligned with the reference O-X the shaft 7 is indexed so that the radius of weight 10 (when in its mid position between stops) represented by vector 27 is aligned with the reference axis. The stops 23, 24 or lenght and position of stop 22 are set so that the weight 10 may move forward or back through a n andle equal to angle AOD measured from its mid position to positions 27' and 27''.

The reference axis could also be taken along O-Y, the bisector of angle BOD. However, to minimize the impact forces that may develop between the weight 10 and its stops, the angular distance or lost motion should be kept at a minimum. Therefore, the bisector of the lesser of the angles AOD and BOD is preferred as the reference.

The direction of rotation is then selected so that the weight 10 lags behind the disk 20 to reach its operative position for the selected path of vibration.

Using whichever reference axis that is vertical in the operative position of the device as installed has the advantage that the weights, when at rest, automatically align themselves with the vertical axis. The stops may then be easily arranged so that the movable weight may move forward or back from its rest position through an angle that is twice the angle between the vertical reference O-Y and the desired path of vibration. Indicia may be provided on the drive disks to indicate the proper positions of the stops for given directions of vibration.

Vibration generators according to the invention may also be used to drive helical conveyors or similar devices. In this case two or mor shafts extend from side to side of the conveyor generally parallel to and adjacent a diameter of the conveyor. Each shaft carries eccentric weights at each end. The shafts are operatively coupled so that some rotate in one direction and some rotate in the opposite direction at the same speed. As illustrated in Fig. 7, three shafts 28, 29, and 30 are operatively coupled together by equal diameter gears 31, 32, and 33, shown as a substitue for the timing belt drive shown in Fig. 1. Weights 34, 35, and 36 are mounted on first ends of shafts so as to be generally in line with one side of a helical conveyor (not shown) to be driven. The weight 35, like the weight 10 of the first example, is loose on the shaft and is driven by stops mounted on a disk 37 fixed to the shaft 29. In this case for a helical drive, a second set of weight 38, 39, and 40 are mounted on the other ends of the shafts 28, 29, and 30 respectively so as to be generally in line with the opposite side of a helical conveyor to be driven. The weights 38 and 40 are loose on the shafts 38 and 30 and are driven by stops on disks 41, 42 fixed to the shafts. The other weight 39 is fixed to the shaft 29.

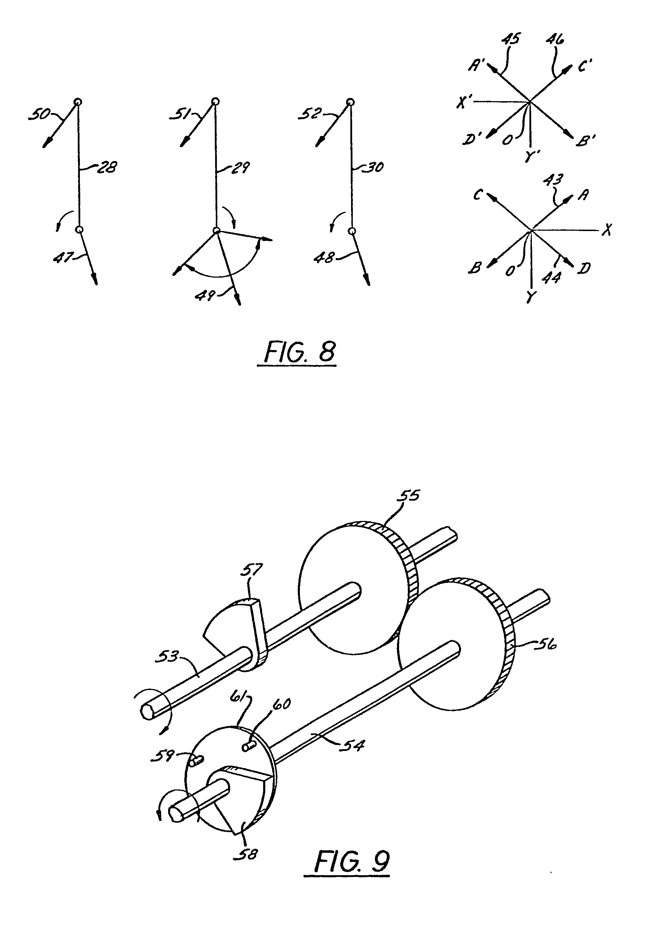

The angular positions of the weights and stops may be determined once the directions of the desired paths of vibration are known or defined. The method is similar to that discussed in connection with Fig. 6$^h$ except that the effect of the weights on opposite sides of the conveyor must also be considered. The vibration generators on opposite sides are synchronized so that the vertical components of force add while the horizontal components are directed in opposite directions to apply a vibratory torque to the helical conveyor. It may be desirable to provide different slopes or angles of attack for the vibratory paths. accordingly the weights and stops may be adjusted to provide a steep helical vibratory path inclined in one direction and a nearly horizontal path in the other direction, for example. Typical paths of vibration .for a first or near side are shown by double headed arrows 43, 44 (Fig. 8) and by arrows 45, 46 for the other or far side. Note that the paths for the far side are shown as seen from the first or near side. The paths on the two sides are mirror images of each other since the horizontal components only are reversed.

As before, angle AOD or BOD and corresponding angles A'O'D' or B'O'D' are bisected to obtain reference axes. Assuming that relatively steep vibratroy paths are required reference axes OY and O'Y' are used. With the radii of weights 34 and 36, represented by vectors 47, 48, aligned with reference axis OY the shaft 29 is indexed so that in the mid position of the loose weight 35 its radius 49 is aligned with the reference axis. The stops are arranged so that the weight can move from center either way through an angle equal to angle BOD.

The reference axis for the weights 38, 39, 40 on the other or far side of the feeder of conveyor is the bisector O'Y' of angle B'O'D'. This is inclined downward to the left and the radii  50, 51, and 52 of the weights are aligned with this reference axis.

Since the force vector relationships of the two generators must be mirror images of each other although the shafts are common, the weights 38 and 40 are loosely mounted on the shafts 28 and 30 while the weight 39 is fixed to its shaft.

Vibration generators using three or more shafts are preferred because the force couples can be eliminated. If a force couple can be tolerated the third shaft may be eliminated leaving two contra-rotating shafts fitted with generally equal eccentric weights. Referring to Fig. 9, a pair of shafts 53, 54 are operatively connected by gears 55, 56 for rotation in opposite directions. An eccentric weight 57 is fixedly mounted on the shaft 53 while a similar weight 58 is loosely mounted on shaft 54 and driven by stops 59 or 60 on a disk 61 rigidly mounted on shaft 54.

In each of the various embodiments the line of action of the vibratory force is varied from one direction to a second direction by reversing the direction of rotation of the eccentric weights and allowing at least one of the the weights to change its position according to the direction of rotation.

CLAIMS:

1. A vibration generator that comprises a reversible motor drive means, counter rotating shafts operatively connected to and driven by said motor means, a first eccentric weight fixedly mounted on one of said counter rotating shafts, a second eccentric weight journalled on a second of said counter rotating shafts, cooperating means on said shaft and said second weight for arresting the relative rotation between said second shaft and said second weight at a first position for a first direction of rotation and at a second position for a second direction of rotation, whereby the line of action of said vibration generator varies according to the direction of rotation of said motor drive means.

2. A vibration generator according to claim 1 in which said first and second positions of said second weight with respect to said second shaft are a half revolution apart.

3. A vibration generator according to claim 1 including means for varying said first and second positions of said second weight with respect to said second shaft.

4. A vibration generator according to claim 1 in which the weights are arranged so that the centrifugal forces of the first and second weights are generally equal to each other.

5. A vibration generator according to claim 1 having a third shaft extending generally parallel to said first shaft and operatively connected to rotate in unison with the first shaft, said second shaft being generally in the same plane and between the first and third shafts, and a third eccentric weight mounted on the third shaft.

6. A vibration generator according to claim 5 in which the weights are arranged so that the sum of the forces generated by the first and third weights is generally equal to the force generated by the second weight.

FIG. 1

FIG. 2

_FIG. 3_

_FIG. 4_

_FIG. 5_

FIG. 7

FIG. 6

0025408

FIG. 8

FIG. 9